# EUROPÄISCHE PATENTSCHRIFT

(11) **EP 2 318 631 B1**
(45) Veröffentlichungstag und Bekanntmachung des Hinweises auf die Patenterteilung: **16.10.2013**
(21) Anmeldenummer: 09777888.0
(22) Anmeldetag: 14.08.2009
(51) Int. Cl.: E05F 1/12, F16F 1/16

(54) **KRAFTFAHRZEUG MIT MECHANISMUS ZUM BEWEGEN EINER KLAPPE ODER TÜR**
MOTOR VEHICLE HAVING A MECHANISM FOR MOVING A PANEL OR DOOR
VÉHICULE AUTOMOBILE COMPRENANT UN MÉCANISME POUR MOUVOIR UN PANNEAU OU UNE PORTE

(30) Priorität: 04.09.2008 DE 102008045892; 10.12.2008 DE 102008061395; 03.07.2009 DE 102009033042
(43) Veröffentlichungstag der Anmeldung: 11.05.2011
(73) Patentinhaber: Audi AG, 85045 Ingolstadt (DE)
(72) Erfinder: BINDER, Franz, 85101 Lenting (DE); SENDTNER, Jürgen, 85095 Denkendorf-Zandt (DE); SINSEDER, Franz, 84405 Dorfen (DE); SCHINDLER, Manfred, 85570 Markt Schwaben (DE); BARTSCH, Knut, 85560 Ebersberg (DE)
(86) Internationale Anmeldenummer: PCT/EP2009/005913
(87) Internationale Veröffentlichungsnummer: WO 2010/025817

(56) Entgegenhaltungen:
- GB-A- 696 420
- US-A- 2 677 146
- US-A- 2 688 764
- US-A- 3 476 375

## Beschreibung

Kraftfahrzeug mit Mechanismus zum Bewegen einer Klappe oder Tür, die insbesondere als Heckklappe oder Scherentür ausgebildet sind und aus einer Geschlossenstellung gegen die Schwerkraft in eine Offenstellung verbringbar sind.

Derartige Mechanismen werden bei Kraftfahrzeugen dazu verwendet, um eine Klappe oder Tür mit verringertem Kraftaufwand für den Benutzer aus einer Geschlossenstellung gegen die Schwerkraft in eine Offenstellung zu bringen und umgekehrt.

Es ist allgemein bekannt, dass zur Unterstützung der Bewegung von zumeist schweren Klappen oder Türen in Kraftfahrzeugen Federn, vorzugsweise Gasdruckfedern, einsetzbar sind. Gasdruckfedern haben jedoch den Nachteil, dass das aufbringbare Stützmoment in Abhängigkeit der Umgebungstemperatur variiert, da sich der Druck des Arbeitsgases im Innern der Gasdruckfeder verändert. Dies hat zur Folge, dass derart gefederte Klappen oder Türen im Winter schwerer zu öffnen und im Sommer schwerer zu schließen sind. Weiterhin variiert das für die Bewegung der Klappe oder Tür aufzubringende Drehmoment in Abhängigkeit von der momentanen Verschwenkstellung. So steigt beispielsweise bei einer Heckklappe das Drehmoment nach dem Verlassen der Geschlossenstellung an, bis eine waagrechte Stellung der Heckklappe erreicht ist, die von einem maximalen Drehmoment gekennzeichnet ist, während bei einem weiteren Verschwenken der Heckklappe in Richtung der Offenstellung eine Abnahme des wirkenden Drehmoments zu verzeichnen ist. Da in der Regel nur Federelemente mit einer linearen Kraft-Weg-Kennlinie zur Verfügung stehen, kann der gekrümmte Drehmomentenverlauf der Klappe oder Tür nur unzureichend kompensiert werden.

Die DE 4104125 A1 beschreibt einen Personenkraftwagen mit einer Heckklappe, welche über zwei Scharniere an einer Dachreling angelenkt ist. Hierbei ist jedes der zwei Scharniere mit einem Fuß der Dachreling gekoppelt und mit jeweils einer Drehstabfeder verbunden. Die Drehstabfeder erstreckt sich jeweils von einem Fuß der Dachreling zu dem gegenüberliegenden Fuß. Die Drehstabfedern unterstützen ein Öffnen der Heckklappe: Bei der Geschlossenstellung der Heckklappe sind die Drehstabfedern vorgespannt, und diese Spannung wird nach einem Entriegeln zum Bewegen der Heckklappe in die Offenstellung genutzt.

Die DE 3023950 A1 zeigt eine Vorrichtung zum Einstellen der Vorspannung von Torsionsstabfedem, die zum Gewichtsausgleich von schwenkbaren Karosseriebauteilen, wie Heckklappen dienen, wobei der jeweils endseitige, bewegte Arbeitsabschnitt an der Heckklappe angreift und ein demgegenüberliegender Stützabschnitt karosserieseitig abgestützt ist. Eine Ratsche mit einem Klinkenrad, welches drehmomentübertragend mit einem der Stababschnitte verbindbar ist, und mit einer Sperrklinke, die ortsfest karosserieseitig befestigbar ist, erlaubt eine statische Anpassung des von den Torsionsstabfedern aufgebrachten Torsionsmoments, welches dem Drehmoment der Heckklappe beim Öffnen und Schließen entgegenwirkt.

Die US 2688764 A offenbart eine Klappe, die unter Einsatz eines Energiespeicherelements und damit gekoppelten Mitteln zum Beeinflussen des von dem Energiespeicherelement bereitgestellten Torsionsmoments von einer Geschlossenstellung gegen die Schwerkraft in eine Offenstellung verbringbar ist, wobei die Klappe um eine Drehachse drehbar gelagert ist und wobei das Torsionsmoment durch die Mittel zum Beeinflussen in Abhängigkeit von der Öffnungsstellung der Klappe beeinflussbar ist.

Die US 2677146 A zeigt ein Kraftfahrzeug mit einer Klappe, die unter Einsatz wenigstens eines Energiespeicherelements und damit gekoppelten Mitteln zum Beeinflussen des von dem wenigstens einem Energiespeicherelement an die Klappe bereitgestellten Torsionsmoments, von einer Geschlossenstellung gegen die Schwerkraft in eine Offenstellung verbringbar ist, wobei die Klappe um eine Drehachse drehbar gelagert ist, wobei das Torsionsmoment durch die Mittel zum Beeinflussen in Abhängigkeit von der Öffnungsstellung der Klappe beeinflussbar ist, wobei ein erstes und ein zweites Energiespeicherelement mit Kräften in gegenläufiger Wirkrichtung beaufschlagbar sind, wobei die Energiespeicherelemente über die Mittel zum Beeinflussen mit der Klappe wirkverbunden sind und wobei die Mittel zum Beeinflussen als Koppelelemente ausgebildet sind, die mit Versatz zur Drehachse an der Klappe angreifen.

Mit derartigen Vorrichtungen ist es möglich das Torsionsmoment in einem geringen Umfang statisch zu variieren, wodurch eine unterschiedliche Unterstützung bei der Betätigung der Heckklappe möglich ist. Dabei ist jedoch weiterhin in fast allen Öffnungsstellungen der Heckklappe eine Differenz zwischen dem aktuellen Drehmoment der Heckklappe und dem eingestellten Torsionsmoment der Torsionsstabfedern vorhanden, welches über den gesamten Öffnungsweg unangenehm hohe Betätigungskräfte voraussetzt.

Aufgabe der vorliegenden Erfindung ist es daher ein Kraftfahrzeug mit einer Klappe oder Tür bereitzustellen, die mit einem relativ kompakten und robusten Mechanismus die benötigten Betätigungskräfte für das Öffnen beziehungsweise Schließen der Klappe oder Türe möglichst gering hält.

Diese Aufgabe wird durch die Merkmale des Patentanspruchs 1 oder 6 gelöst.

Ein Kraftfahrzeug hat eine Klappe oder Tür, die unter Einsatz wenigstens eines Energiespeicherelements und damit gekoppelten Mitteln zum Beeinflussen des von dem wenigstens einem Energiespeicherelement an die Klappe oder Tür bereitgestellten Torsionsmoments, von einer Geschlossenstellung gegen die Schwerkraft in eine Offenstellung verbringbar ist, wobei die Klappe oder Tür um eine Drehachse drehbar gelagert ist und wobei das Torsionsmoment durch die die Mittel zum Beeinflussen in Abhängigkeit von der Öffnungsstellung der Klappe oder Tür beeinflussbar ist.

Diese von der Klappe oder Tür verschiedenen Mittel zum Beeinflussen sind bevorzugt im Kraftweg von dem wenigstens einem Energiespeicherelement zu der Klappe bzw. Tür, oder umgekehrt angeordnet. Durch die Mittel zum Beeinflussen des Torsionsmoments kann dem Umstand entgegengewirkt werden, dass ein nicht von diesen Mitteln beaufschlagtes Energiespeicherelement ein Torsionsmoment bereitstellt, welches beim Bewegen der Klappe oder Tür von der Geschlossenstellung in die Offenstellung linear abnimmt. Demgegenüber nimmt das aufgrund des Gewichts der Klappe oder Tür wirkende Drehmoment beim Verbringen von der Geschlossenstellung in die Offenstellung üblicherweise zunächst zu, bis die Klappe oder Tür eine im Wesentlichen waagrechte Stellung erreicht hat. In dieser Stellung der Klappe oder Tür weist das aufgrund der Klappe oder Tür wirkende Drehmoment einen Maximalwert auf. Ein Schwerpunkt der Klappe oder Tür hat hier einen maximalen Abstand zu der Schwenkachse. Bei einem weiteren Verschwenken der Klappe oder Tür nimmt das aufgrund der Klappe oder Tür wirkende Drehmoment bis zum Erreichen der Endstellung wieder ab. Durch die Mittel zum Beeinflussen des Torsionsmoments ist in vorteilhafter Weise ein Unterschied zwischen dem von dem wenigstens einem Energiespeicherelement auf die Klappe oder Tür übertragenen Torsionsmoment und dem aufgrund des Gewichts der Klappe oder Tür wirkenden Gegenmoment beeinflussbar, vorzugsweise verringerbar.

In einer bevorzugten Ausführung beeinflussen die Mittel zum Beeinflussen das Torsionsmoment derart, dass sich in mehreren Öffnungsstellungen, vorzugsweise in jeder Öffnungsstellung, der Klappe oder Tür ein Momentengleichgewicht einstellt. Dadurch ist erreichbar, dass selbst der Maximalwert des von der Klappe oder Tür aufgebrachten Drehmoments mittels des wenigstens einen Energiespeicherelements kompensiert wird. Gleichzeitig ist so erreichbar, dass bei von der den Maximalwert kennzeichnenden Öffnungsstellung der Klappe oder Tür abweichenden Öffnungsstellungen ein geringeres Moment von dem Energiespeicherelement auf die Klappe oder Tür übertragen wird, so dass einem zu raschen Öffnen der Klappe oder Tür entgegengewirkt ist.

Die Betätigungskräfte zum Verschwenken der Klappe oder Tür können somit besonders gering gehalten werden, wobei zusätzlich eine Selbsthaltung der Klappe oder Tür in mehreren bzw. jeder Öffnungsstellung gewährleistet ist. In weiter vorteilhafter Weise sind die Mittel zum Beeinflussen bei zwei voneinander verschiedenen Öffnungsstellungen der Klappe oder Tür in zwei unterschiedlichen Zuständen. So kann vorgesehen sein, dass bei der Öffnungsstellung der Klappe oder Tür, bei welcher das Drehmoment der Klappe oder Tür einen Maximalwert aufweist, durch die Mittel zum Beeinflussen kein Torsionsmoment bereitgestellt wird, so dass die Klappe oder Tür von dem Torsionsmoment des Energiespeicherelements in einem Schwebezustand gehalten ist. Bei einer von dieser ersten Öffnungsstellung abweichenden zweiten Öffnungsstellung der Klappe oder Tür befinden sich die Mittel zum Beeinflussen demgegenüber in einem zweiten Zustand, in welchem das von dem wenigstens einem Energiespeicherelement auf die Klappe oder Tür übertragene Torsionsmoment so verringert ist, dass das Drehmoment der Klappe oder Tür zumindest sehr weitgehend kompensiert ist. Ist die Klappe oder Tür sogar auf ihrem gesamten Verschwenkweg im Schwebezustand gehalten, so braucht zum Öffnen oder Schließen der Klappe oder Tür lediglich eine sehr geringe, die Wirkung einer trägen Masse der Klappe oder Tür sowie Reibungskräfte überwindende Kraft bereitgestellt zu werden. Diese sehr geringe Kraft kann durch die Handkraft einer Bedienperson oder durch einen Antriebsmotor mit sehr geringer Leistung aufgebracht werden. Durch das wenigstens eine Energiespeicherelement kann alternativ auf die Klappe oder Tür ein Torsionsmoment übertragen werden, welches geringfügig, insbesondere über den gesamten Verschwenkweg gleichmäßig, größer ist als das Gegenmoment der Klappe oder Tür. Somit ist beispielsweise ein besonders komfortables, selbsttätiges Öffnen der Klappe oder Tür, beispielsweise nach einem Entriegeln der Klappe oder Tür mittels eines Funkschlüssels, ermöglicht. Hierbei muss dann lediglich zum Schließen der Klappe oder Tür eine vergleichsweise geringe Handkraft oder die Kraft des Antriebsmotors aufgebracht werden.

In einer bevorzugten Ausführung weisen die Energiespeicherelemente eine im Wesentlichen lineare Kraft-Weg-Kennlinie auf. Energiespeicherelemente mit linearer Kraft-Weg-Kennlinie, also beispielsweise Federelemente mit linearer Federkennlinie nach dem Hookschen Gesetz, sind in vielfachen Ausführungsformen vorhanden, wodurch eine spezifische Auswahl für den vorliegenden Anwendungsfall getroffen werden kann.

In einer bevorzugten Ausführung sind die Energiespeicherelemente als Drehstabfedern oder Drehstabfedersysteme ausgebildet, wobei die Drehstabfedersysteme in einer besonders bevorzugten Ausführung aus mehreren Drehstäben bestehen, die untereinander derart verbunden sind, dass sich die wirksame Länge der miteinander verbundenen Drehstabfedern erhöht. Die bevorzugten Drehstabfedern oder Drehstabfedersysteme sind besonders kostengünstig, sowie robust und erlauben eine kompakte Ausgestaltung der Energiespeicherelemente, wodurch sich diese leichter in die Karosserie des Kraftfahrzeugs integrieren lassen. Indem mehrere Drehstäbe beispielsweise parallel angeordnet und mäanderförmig miteinander drehfest verbunden werden, hat das entstandene Drehstabfedersystem eine besonders große wirksame Länge bei gleichzeitig geringem Bauraumbedarf. Hierbei kann anstelle einer einzigen, eine vergleichsweise große Querschnittsfläche aufweisenden Drehstabfeder ein zwei miteinander gekoppelte Drehstabfedern umfassendes Drehstabfedersystem mit einem Scharnier der Klappe oder Tür gekoppelt sein, wobei die zwei miteinander gekoppelten Drehstabfedern jeweils eine geringere Querschnittsfläche aufweisen. Das Koppeln von zwei oder mehr Drehstabfedern kann beispielsweise mittels einer Verzahnung von im Querschnitt runden Drehstabfedern oder durch anderweitiges geeignetes Verbinden von etwa als Flachstäben ausgebildeten Drehstabfedern erfolgen.

Als weiter vorteilhaft hat es sich gezeigt, wenn zum Koppeln von zwei miteinander in Wirkverbindung stehenden Drehstabfedern ein Kopplungselement vorgesehen ist, mittels welchem eine wirksame Länge der miteinander gekoppelten Drehstabfedern veränderbar ist. Durch ein Verändern der wirksamen Länge der miteinander gekoppelten Drehstabfedern ist ein Verändern eines von den Drehstabfedern an die Klappe oder Tür bereitgestellten Torsionsmoments ermöglicht. So kann bei Vorliegen einer zusätzlichen Last auf der Klappe oder Tür, z.B. Schnee, der auf der Klappe oder Tür liegt, die wirksame Länge der miteinander gekoppelten Drehstabfedern vergrößert werden, um das Öffnen der Klappe oder Tür an die veränderten Randbedingungen angepasst zu unterstützen.

In einer bevorzugten Ausführung ist die Drehstabfeder oder das Drehstabfedersystem in ein zum Begrenzen eines Fahrgastraums bereitgestelltes Karosserieelement integriert. Das Integrieren kann hierbei ein Anordnen zwischen zwei Karosseriebauteilen sein, durch welche ein doppelwandiges Karosserieelement bereitgestellt ist oder ein Anordnen zwischen einem Verkleidungsteil und einem Karosseriebauteil. Durch die Erfindung wird ein platzsparendes Unterbringen des Mechanismus ermöglicht, wo es besonders wenig stört. Der Fahrgastraum ist bei Personenkraftwagen rückwärtig durch ein Heck begrenzt, welches als Schrägheck, Steilheck oder Stufenheck ausgebildet sein kann.

In einer bevorzugten Ausführung ist an dem Energiespeicherelement ein Hebel mit variabler Hebelarmlänge drehfest angeordnet, der mit seinem frei verschwenkbaren Ende in einer Kulisse geführt ist, wobei an dem frei verschwenkbaren Ende zusätzlich ein Schubelement angreift, welches mit der Klappe oder Tür in Wirkverbindung steht und von diesen im Wesentlichen translatorisch bewegbar ist. Indem der Hebel, welcher das Energiespeicherelement mit dem Schubelement koppelt, seine Hebelarmlänge variieren kann, ist es möglich den Kraft- bzw. Drehmomentenverlauf des linearen Energiespeicherelements an den gekrümmten Drehmomentenverlauf der Klappe oder Tür anzupassen. Dadurch kann in jeder Stellung der Klappe oder Tür, egal ob diese aus der Geschlossenstellung in die Offenstellung oder umgekehrt aus der Offenstellung in die Geschlossenstellung verschwenkt wird, dem Drehmoment der Klappe oder Tür ein entsprechendes Torsionsmoment des Energiespeicherelements entgegengesetzt werden. Dies erlaubt sehr geringe Betätigungskräfte und beispielsweise eine Selbsthaltung der Klappe oder Tür in jeder Stellung. Durch eine Variation der Vorspannung des Energiespeicherelements, beispielsweise durch einen elektromechanischen Aktuator, kann zudem ein Verlauf des Torsionsmoments parallel zum Drehmoment der Klappe oder Tür eingestellt werden, so dass die Klappe oder Tür entweder von selbst schließt oder öffnet.

In einer bevorzugten Ausführung ist die Kulisse als ein erstes Langloch ausgebildet, in dem ein an dem frei verschwenkbaren Ende des Hebels angeordneter Bolzen geführt wird. Durch die Anordnung eines Bolzens in der als erstes Langloch ausgeführten Kulisse, kann ein Bewegung des frei verschwenkbaren Endes des Hebels mit sehr geringen Reibungskräften erfolgen.

In einer bevorzugten Ausführung ist der Bolzen in einem in dem Hebel ausgebildeten zweiten Langloch, welches sich im Wesentlichen in axialer Richtung des Hebels erstreckt, beweglich gelagert. Dadurch ist es möglich, dass der Bolzen entlang der axialen Erstreckung des Hebels im zweiten Langloch verschiebbar ist, wodurch sich die Hebelarmlänge durch eine entsprechende Ausgestaltung der Kulisse in Abhängigkeit vom Öffnungsgrad der Klappe oder Tür variieren lässt. Die bewegliche Lagerung des Bolzens reduziert weiterhin die Reibungskräfte, da der Bolzen in der Kulisse abrollen kann.

In einer bevorzugten Ausführung ist das erste Langloch in axialer Erstreckung kurvig, vorzugsweise sinusförmig, ausgebildet. Indem das erste Langloch in axialer Erstreckung kurvig, vorzugsweise sinusförmig, ausgebildet ist, kann die Hebelarmlänge des Hebels durch die Führung des Bolzens in dem ersten Langloch und der axialen Verschiebbarkeit des Bolzens im zweiten Langloch, so angepasst werden, dass sich ein gewünschter Torsionsmomentenverlauf ergibt, der dem spezifischen Drehmomentenverlauf der Klappe oder Tür beim Verschwenken entgegenwirkt. Weiterhin sind je nach Drehmomentenverlauf der Klappe oder Tür auch kreisbogenförmige oder frei geformte Langlochkonturen möglich.

In einer bevorzugten Ausführung greift das Schubelement mit Versatz zu der Drehachse an der Klappe oder Tür an. Dadurch wird die rotatorische Bewegung der Klappe oder Tür, welche um die Drehachse verschwenkbar ist, besonders einfach in eine translatorische Bewegung des Schubelements umgewandelt.

In einer bevorzugten Ausführung sind ein erstes und ein zweites Energiespeicherelement mit Kräften in gegenläufiger Wirkrichtung beaufschlagbar und die Energiespeicherelemente sind über die Mittel zum Beeinflussen mit der Klappe oder Tür wirkverbunden, wobei die Mittel zum Beeinflussen als Koppelelemente ausgebildet sind, die mit Versatz zur ortsfesten Drehachse an der Klappe oder Tür angreifen. Indem ein erstes und ein zweites Energiespeicherelement in gegenläufiger Wirkrichtung mit Kraft beaufschlagbar sind, kann durch die Anbringung der Koppelelemente mit Versatz zur Drehachse der Klappe oder Tür eine variable, vorzugsweise asynchrone, Aufladung der Energiespeicherelemente in Abhängigkeit von der momentanen Stellung der Klappe oder Tür erfolgen. Durch die gegenseitige Beeinflussung der beiden Energiespeicherelemente wird dem Drehmoment der Klappe oder Tür ein spezifisches Torsionsmoment aus den Energiespeicherelementen entgegengesetzt. Die Verbindung der Energiespeicherelemente mit der Klappe oder Tür durch Koppelelemente zeichnet sich insbesondere durch seine robuste Bauweise aus, da nur wenige bewegte Teile gelagert werden müssen.

In einer bevorzugten Ausführung sind die Koppelelemente als Gelenkscharniere ausgebildet und drehfest an den Energiespeicherelementen angeordnet.

In einer bevorzugten Ausführung ist die wenigstens eine Drehstabfeder kürzer als eine Breite der Klappe in Richtung einer zum Kraftfahrzeug definierten Fahrzeugquerachse. So kann eine Länge einer einzigen Drehstabfeder oder eine jeweilige Länge einer Mehrzahl von miteinander gekoppelten Drehstabfedern so bemessen sein, dass sie von einem randlich der Klappe angeordneten Scharnier bis zu einer (in Richtung der Fahrzeugquerachse gesehenen) Mitte des Kraftfahrzeugs reicht. Insbesondere beim Anordnen der wenigstens einen Drehstabfeder innerhalb des Dachquerträgers bzw. des Daches zum Bewegen der Heckklappe ist dies vorteilhaft, da die wenigstens eine Drehstabfeder so besonders einfach innerhalb des üblicherweise eine Krümmung aufweisenden Dachquerträgers bzw. Daches anordenbar ist.

In einer bevorzugten Ausführung ist die wenigstens eine Drehstabfeder gekrümmt und in wenigstens einem Stützlager abgestützt. So kann etwa die innerhalb des Dachquerträgers bzw. des Daches angeordnete Drehstabfeder von einer Seite des Kraftfahrzeugs in Richtung der Fahrzeugquerachse sich bis zur anderen Seite des Kraftfahrzeugs erstrecken, hierbei der Krümmung des Querträgers oder des Daches folgen und beispielsweise mittig in dem Stützlager abgestützt sein. Dadurch sind auch vergleichsweise lange Drehstabfedern gut in das gewünschte Karosserieelement integrierbar.

In einer bevorzugten Ausführung ist die wenigstens eine Drehstabfeder von wenigstens einem Gehäuse zur Förderung einer Quersteifigkeit des Karosserieelements umgeben. Hierbei trägt in vorteilhafter Weise das wenigstens eine Gehäuse zur Gesamtquersteifigkeit des Karosserieelements, etwa des Querträgers, bei. Das Gehäuse kann durch zwei Halbschalen gebildet sein, in welchen die wenigstens eine, insbesondere von einer Lagerhülse umgebene, Drehstabfeder aufgenommen ist. Zusätzlich kann das Gehäuse durch ein, insbesondere Sicken oder dergleichen Versteifungselemente aufweisendes, Stützelement, etwa ein Stützblech, verstärkt sein.

In einer bevorzugten Ausführung ist die Klappe eine Heckklappe oder ein Kofferraumdeckel, wobei die Mittel zum Beeinflussen symmetrisch an den äußeren Randbereichen der Heckklappe oder des Kofferraumdeckels angreifen. Durch das symmetrische Angreifen der Mittel zum Beeinflussen an mindestens einem äußeren Randbereich der Klappe, kann die Heckklappe bei unauffälliger Anbringung des Mechanismus besonders gut unterstützt werden, da das Drehmoment der Klappe oder Tür auf zwei symmetrische Mechanismen mit zugeordneten Energiespeicherelementen aufgeteilt wird. Durch die Erfindung wird es unter anderem auch ermöglicht, eine solche Klappe einzusetzen, die senkrecht zur Fahrzeugquerachse (typischerweise senkrecht zur Schwenkachse) eine Länge von mindestens 1,15 m, bevorzugt von mindestens 1,20 m, besonders bevorzugt von mindestens 1,25 m und ganz besonders bevorzugt von mindestens 1,30 m hat. Dies eröffnet den Fahrzeugkonstrukteuren neue Möglichkeiten: Sie können ein anderes Aussehen des Kraftfahrzeugs aus ästhetischen oder auch aerodynamischen Gründen vorsehen.

Ist die Klappe eine Heckklappe, so ist es besonders vorteilhaft die wenigstens eine Drehstabfeder in einen Dachquerträger zu integrieren. Der Dachquerträger kann hierbei bereichsweise ein Dach des Fahrgastraums bilden. Die wenigstens eine Drehstabfeder ist somit besonders wenig störend und an einer solchen Stelle und mit solcher Orientierung untergebracht, von wo aus optimal Kräfte auf die Heckklappe übertragen werden können. Ist die Klappe hingegen ein Kofferraumdeckel, kann ein unterhalb einer Heckscheibe angeordneter Querträger zum wenig störenden Unterbringen der wenigstens einen Drehstabfeder dienen.

In einer bevorzugten Ausführung ist die Tür eine Scherentür oder Schmetterlingstür. Scherentüren sind solche Türen, die an einer Karosseriesäule des Kraftfahrzeugs angeschlagen sind und durch eine im Wesentlichen vertikale Verschwenkbewegung eine Zutrittsöffnung zum Kraftfahrzeug für den Fahrgast eröffnen. Schmetterlingstüren führen zusätzlich zu der vertikalen Schwenkbewegung eine seitwärtsgerichtete Bewegung aus und öffnen gegebenenfalls auch einen Teil des Dachs des Kraftfahrzeugs, was für die Passagiere Vorteile beim Einstieg in das Kraftfahrzeug mit sich bringt.

Mittels der vorliegend beschriebenen wenigstens einen Drehstabfeder ist es ermöglicht, die aufgrund der besonderen Länge und Schwere der Klappe oder Tür beim Verbringen von der Geschlossenstellung in die Offenstellung wirkenden Drehmomente soweit zu kompensieren, dass über den gesamten Öffnungsweg der Klappe oder Tür lediglich sehr geringe, mittels der Handkraft einer Bedienperson besonders leicht aufzubringende Momente zum Öffnen der Klappe oder Tür bereitzustellen sind. Es kann zum Bereitstellen dieser sehr geringen Momente auch ein sehr schwacher Motor, etwa ein Piezomotor, vorgesehen sein. Ein solcher sehr schwacher Motor ermöglicht im Falle eines Einklemmens eines Gegenstands oder Körperteils zwischen der Klappe, bzw. der Tür, und einem angrenzenden Karosseriebauteil auf sehr einfache Weise ein rasches Verringern der Antriebsleistung des Motors, sobald aufgrund des Einklemmens eine Fremdkraft erkannt wird.

Weitere Einzelheiten, Merkmale und Vorteile der Erfindung ergeben sich aus der nachstehenden Beschreibung eines bevorzugten Ausführungsbeispiels der Erfindung.

Darin zeigen:
**Fig. 1** eine erste Ausführungsform eines Drehstabfedersystems für ein erfindungsgemäßes Kraftfahrzeug;
**Fig. 2** die erste Ausführungsform mit alternativem Energiespeicherelement;
**Fig. 3** eine zweite Ausführungsform eines Drehstabfedersystems für ein erfindungsgemäßes Kraftfahrzeug;
**Fig. 4** ein Drehstabfedersystem zum Unterstützen eines Öffnens einer Heckklappe eines erfindungsgemäßen Kraftfahrzeugs mit einer dritten Ausführungsform des Drehstabfedersystems;
**Fig. 5** eine teilweise geschnittene, vergrößerte Detailansicht des Drehstabfedersystems gemäß Fig. 4;
**Fig. 6** eine perspektivische Ansicht auf einen mittigen Schnitt des Drehstabfedersystems gemäß Fig. 4;
**Fig. 7** einen mittigen Schnitt des einen Dachquerträger des Kraftfahrzeugs integrierten Drehstabfedersystems gemäß Fig. 4;
**Fig. 8** eine vierte, stark schematisierte Ausführungsform eines Drehstabfedersystems zum Unterstützen des Öffnens einer Heckklappe eines erfindungsgemäßen Kraftfahrzeugs;
**Fig. 9** eine Seitenansicht des Drehstabfedersystems gemäß Fig. 8 bei einer Geschlossenstellung der Heckklappe;
**Fig. 10** eine Seitenansicht des Drehstabfedersystems gemäß Fig. 8 in einer ersten Öffnungsstellung der Heckklappe;
**Fig. 11** eine Seitenansicht des Drehstabfedersystems gemäß Fig. 8 in einer zweiten Öffnungsstellung der Heckklappe;
**Fig. 12** eine perspektivische Ansicht einer fünften Ausführungsform eines Drehstabfedersystems für ein erfindungsgemäßes Kraftfahrzeug;
**Fig. 13** eine teilweise geschnittene Draufsicht auf einen Ausschnitt des Drehstabfedersystems gemäß Fig. 12;
**Fig. 14** eine sechste Ausführungsform eines Drehstabfedersystems für ein erfindungsgemäßes Kraftfahrzeug und
**Fig. 15** eine siebte Ausführungsform eines Drehstabfedersystems für ein erfindungsgemäßes Kraftfahrzeug.

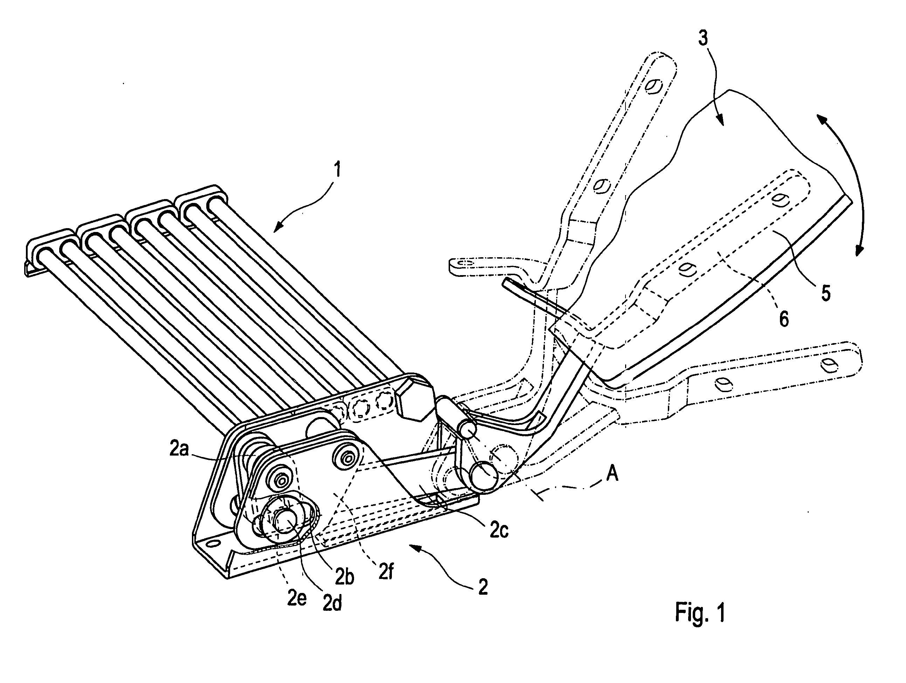

Gemäß **Fig. 1** kann eine Klappe 3 oder Tür 3 von einer Geschlossenstellung gegen die Schwerkraft in eine Offenstellung verbracht werden, wobei die Klappe 3 oder Tür 3 einen in einem Randbereich 5 der Klappe 3 oder Tür 3 angeordneten Scharnierhebel 6 aufweist, der um eine Drehachse A drehbar gelagert ist und so eine Schwenkbewegung der Klappe 3 oder Tür 3 von der Geschlossenstellung in die Offenstellung und umgekehrt zulässt. In Fig. 1 sind dabei exemplarisch drei verschiedene Schwenkstellungen des Scharnierhebels 6 dargestellt. Mit Versatz zur Drehachse A ist ein Schubelement 2c an dem Scharnierhebel 6 angeordnet, so dass die Schwenkbewegung der Klappe 3 oder Tür 3 in eine translatorische Bewegung des Schubelements 2c umwandelbar ist. Weiterhin ist ein Energiespeicherelement in Form eines Drehstabfedersystems 1 vorgesehen, welches einseitig festgesetzt ist und an dem anderen Ende drehfest mit einem Hebel 2a verbunden ist. Das Drehstabfedersystem 1 besteht aus mehreren parallelen Drehstäben, die an ihren jeweiligen Enden derart untereinander verbunden sind, dass sich die wirksame Länge der einzelnen Drehstäbe verlängert und somit eine gewünschte Federkennlinie erzielbar ist. Das frei verschwenkbare Ende des Hebels 2a weist ein zweites Langloch 2e auf, welches sich in axialer Richtung des Hebels 2a erstreckt und einen Bolzen 2d axial verschiebbar lagert. Der Bolzen 2d ist weiterhin in einer als erstes Langloch 2b ausgebildeten Kulisse geführt, wobei das erste Langloch 2b in einer ortsfest montierten Trägerplatte 2f eingebracht ist. Das erste Langloch 2b ist dabei so dimensioniert, dass sich der Bolzen 2d vorrangig nur in axialer Erstreckung des ersten Langlochs 2b bewegen kann. Das Schubelement 2c greift an dem Bolzen 2d an und überträgt so die Bewegung der Klappe 3 oder Tür 3 auf den Hebel 2a, welcher wiederum das Drehstabfedersystem 1 entsprechend tordiert. Das erste Langloch 2b weist dabei in axialer Erstreckung ein kurviges, insbesondere sinusförmiges Profil auf, so dass die wirksame Länge des Hebels 2a beim durchlaufen des ersten Langlochs 2b verbunden mit einer Bewegung des Bolzens 2d im zweiten Langloch 2e kontinuierlich derart angepasst wird, dass einem von der Klappe 3 oder Tür 3 eingebrachten Drehmoment ein gegengerichtetes Torsionsmoment aus dem Drehstabfedersystem 1 entgegengesetzt wird, welches die Klappe 3 oder Tür 3 in jeder beliebigen Stellung im Gleichgewicht hält. Ist die Klappe 3 oder Tür 3 eine Heckklappe, so werden entsprechende Drehstabfedersysteme 1 und Mittel zum Beeinflussen 2 vorzugsweise symmetrisch am Kraftfahrzeug angeordnet, um auf den jeweiligen äußeren Randbereich 5 der Klappe 3 oder Tür 3 zu wirken.

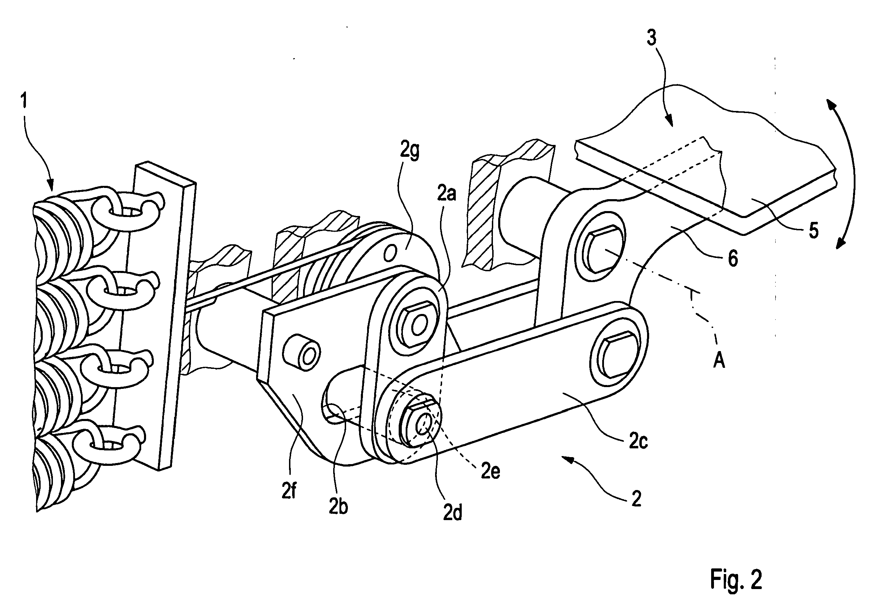

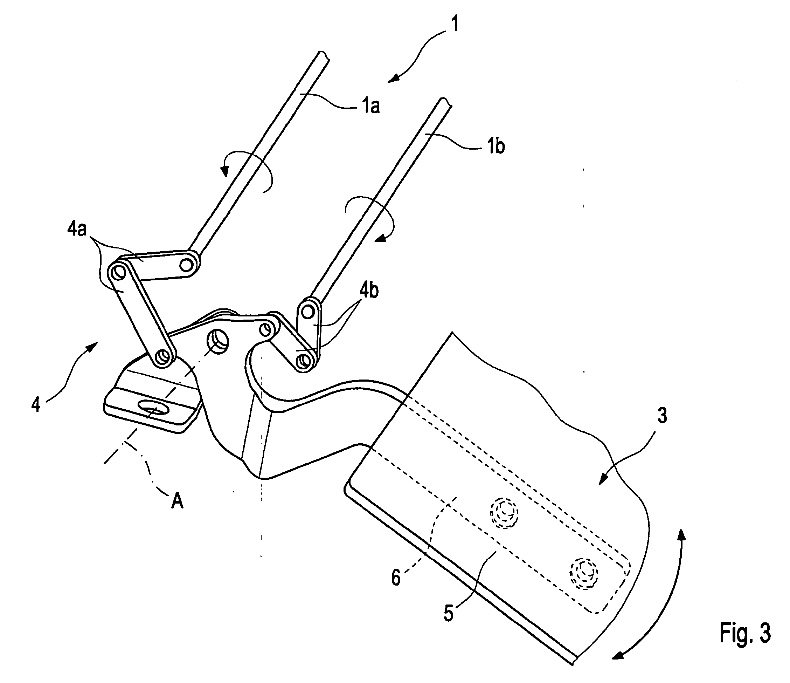

Gemäß **Fig. 2** kann eine Klappe 3 oder Tür 3 von einer Geschlossenstellung gegen die Schwerkraft in eine Offenstellung verbracht werden, wobei die Klappe 3 oder Tür 3 einen in einem Randbereich 5 der Klappe 3 oder Tür 3 angeordneten Scharnierhebel 6 aufweist, der um eine Drehachse A drehbar gelagert ist und so eine Schwenkbewegung der Klappe 3 oder Tür 3 von der Geschlossenstellung in die Offenstellung und umgekehrt zulässt. Mit Versatz zur Drehachse A ist ein Schubelement 2c an dem Scharnierhebel 6 angeordnet, so dass die Schwenkbewegung der Klappe 3 oder Tür 3 in eine translatorische Bewegung des Schubelements 2c umwandelbar ist. Weiterhin ist ein Energiespeicherelement 1 in Form eines Spiralfedersystems vorgesehen, welches einseitig festgesetzt ist und an dem anderen Ende durch ein über eine Seilscheibe 2g geführtes Zugseil mit dem Hebel 2a verbunden ist. Die Seilscheibe 2g kann dabei als ein Teil des Hebels 2a ausgebildet sein und dient der Übersetzung der rotatorischen Bewegung des Hebels 2a in eine translatorische Bewegung des Zugseils. Das Spiralfedersystem 1 besteht vorzugsweise aus mehreren parallelen Spiralfedern, die über eine gemeinsame Halteplatte mit dem Zugseil verbunden sind, so dass sich eine gewünschte Federkennlinie mit möglichst wenig Bauraumbedarf erzielen lässt. Das frei verschwenkbare Ende des Hebels 2a weist indes ein zweites Langloch 2e auf, welches sich in axialer Richtung des Hebels 2a erstreckt und einen Bolzen 2d axial verschiebbar lagert. Der Bolzen 2d ist weiterhin in einer als erstes Langloch 2b ausgebildeten Kulisse geführt, wobei das erste Langloch 2b in einer ortsfest montierten Trägerplatte 2f eingebracht ist. Das erste Langloch 2b ist dabei so dimensioniert, dass sich der Bolzen 2d vorrangig nur in axialer Erstreckung des ersten Langlochs 2b bewegen kann. Das Schubelement 2c greift an dem Bolzen 2d an und überträgt so die Bewegung der Klappe 3 oder Tür 3 auf den Hebel 2a, welcher wiederum das Spiralfedersystem 1 entsprechend tordiert. Das erste Langloch 2b weist dabei in axialer Erstreckung ein kurviges, insbesondere sinusförmiges Profil auf, so dass die wirksame Länge des Hebels 2a beim durchlaufen des ersten Langlochs 2b verbunden mit einer Bewegung des Bolzens 2d im zweiten Langloch 2e kontinuierlich derart angepasst wird, dass einem von der Klappe 3 oder Tür 3 eingebrachten Drehmoment ein gegengerichtetes Torsionsmoment aus dem Spiralfedersystem 1 in Zusammenspiel mit der Seilscheibe 2g entgegengesetzt wird, welches die Klappe 3 oder Tür 3 in jeder beliebigen Stellung im Gleichgewicht hält. Ist die Klappe 3 oder Tür 3 eine Heckklappe, so werden entsprechende Spiralfedersysteme 1 und Mittel zum Beeinflussen 2 vorzugsweise symmetrisch am Kraftfahrzeug angeordnet, um auf den jeweiligen äußeren Randbereich 5 der Klappe 3 oder Tür 3 zu wirken. Gemäß **Fig. 3** kann eine Klappe 3 oder Tür 3 von einer Geschlossenstellung gegen die Schwerkraft in eine Offenstellung verbracht werden, wobei die Klappe 3 oder Tür 3 einen in einem Randbereich 5 der Klappe 3 oder Tür 3 angeordneten Scharnierhebel 6 aufweist, der um eine ortsfeste Drehachse A drehbar in einem Lagerbock gelagert ist und so eine Schwenkbewegung der Klappe 3 oder Tür 3 von der Geschlossenstellung in die Offenstellung und umgekehrt zulässt. Mit Versatz zur Drehachse A sind gegenüberliegend Koppelelemente 4a und 4b angeordnet, die vorzugsweise als zweigliedrige Gelenkscharniere ausgebildet sind. Die Koppelelemente 4a und 4b greifen jeweils an einem Energiespeicherelement 1a und 1b an, welches vorzugsweise als Drehstabfeder oder Drehstabfedersystem ausgebildet ist. Dadurch, dass die Koppelelemente 4a und 4b versetzt gegenüberliegend der Drehachse A an dem Scharnierhebel 6 angreifen, führt eine Bewegung der Klappe 3 oder Tür 3 zu einer Änderung des wirksamen Normalabstands zwischen dem Angriffspunkt der Koppelelemente 4a und 4b an dem Scharnierhebel 6 und der entsprechenden ersten 1a oder zweiten Drehstabfeder 1b, die somit in entgegengesetzter Wirkrichtung mit unterschiedlich hoher Kraft beaufschlagt und tordiert werden. Dadurch wirkt dem von der Klappe 3 oder Tür 3 eingebrachten Drehmoment in jeder Stellung der Klappe 3 oder Tür 3 ein von der ersten 1a und der zweiten 1b Drehstabfeder aufgebrachtes Torsionsmoment entgegen, welches die Klappe 3 oder Tür 3 im Gleichgewicht hält. Ist die Klappe 3 oder Tür 3 eine Heckklappe, so werden entsprechende Drehstabfedersysteme 1 und Mittel zum Beeinflussen 4 vorzugsweise symmetrisch am Kraftfahrzeug angeordnet, um auf den jeweiligen äußeren Randbereich 5 der Klappe 3 oder Tür 3 zu wirken.

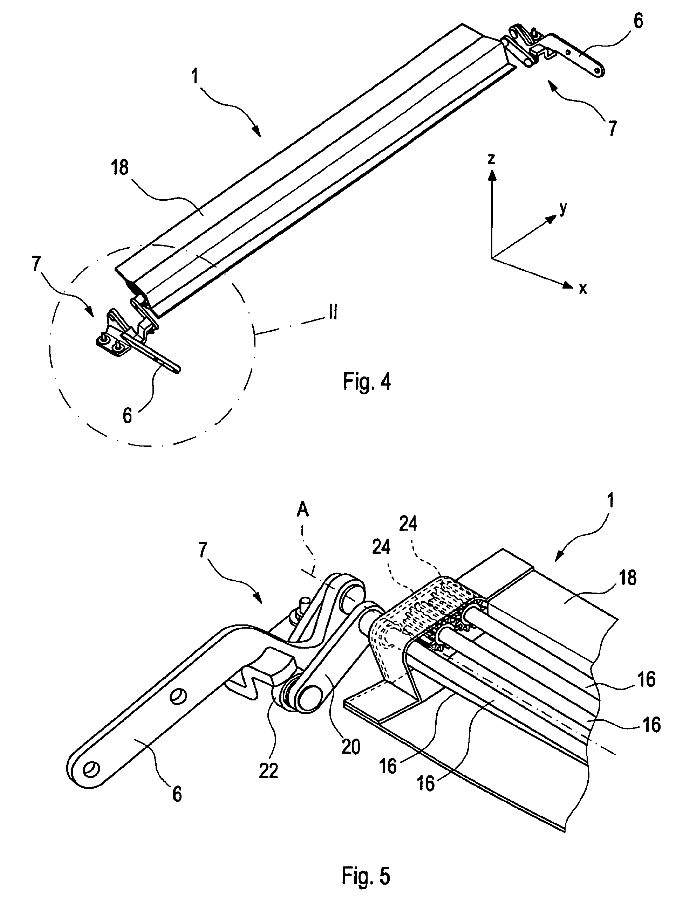

**Fig. 4** zeigt ein als Drehstabfedersystem 1 ausgebildetes Energiespeicherelement zum Unterstützen eines Öffnens einer Heckklappe eines Kraftfahrzeugs. Das Drehstabfedersystem 1 wirkt über einen rechten und einen linken Scharnierhebel 6 auf die in Fig. 4 nicht gezeigte Heckklappe, welche um eine in Fig. 5 dargestellte Drehachse A verschwenkbar ist. Das Drehstabfedersystem 1 weist eine Längserstreckung auf, welche zu einer Fahrzeugquerachse y parallel und zu einer Fahrzeuglängsachse x senkrecht ist. Die Drehachse A ist ebenfalls parallel zu der Fahrzeugquerachse y.

Wie aus **Fig. 5** hervorgeht umfasst das Drehstabfedersystem 1 vier einzelne Drehstabfedern 16, welche von einem Gehäuse 18 umgeben sind. Jeweils zwei der vier Drehstabfedern 16 dienen dem Bewegen eines Schwenkarms 20, welcher auf den Scharnierhebel 6 über eine Rolle 22 einwirkt. Die unter Vorspannung stehenden Drehstabfedern 16 bewirken nach dem Entriegeln der Heckklappe ein Verschwenken des Schwenkarms 20, wobei die Rolle 22 auf einem Widerlager des Scharnierhebels 6 abrollt. Die zwei auf den Scharnierhebel 6 wirkenden Drehstabfedern 16 sind in einem Randbereich des Gehäuses 18 durch Verzahnen miteinander gekoppelt. Der Randbereich des Gehäuses 18 ist benachbart zu dem in Fig. 5 nicht dargestellten, gegenüberliegenden Scharnierhebel 6 angeordnet. Die wirksame Länge der auf den Schwenkarm 20 ein Torsionsmoment übertragenden Drehstabfedern 16 beträgt somit das Doppelte der Länge einer einzelnen Drehstabfeder 16. Die den Scharnierhebel 6 beim Bewegen der Heckklappe mit einem Torsionsmoment beaufschlagenden weiteren zwei Drehstabfedern 16 sind ebenfalls im Randbereich des Gehäuses 18 mittels Zahnrädern 24 miteinander verzahnt. Vorliegend nicht gezeigte Zahnräder, welche dem gegenüberliegenden Scharnierhebel 6 zugeordneten Drehstabfedern 16 miteinander koppeln, sind in analoger Weise in dem Drehstabfedersystem 1 vorgesehen.

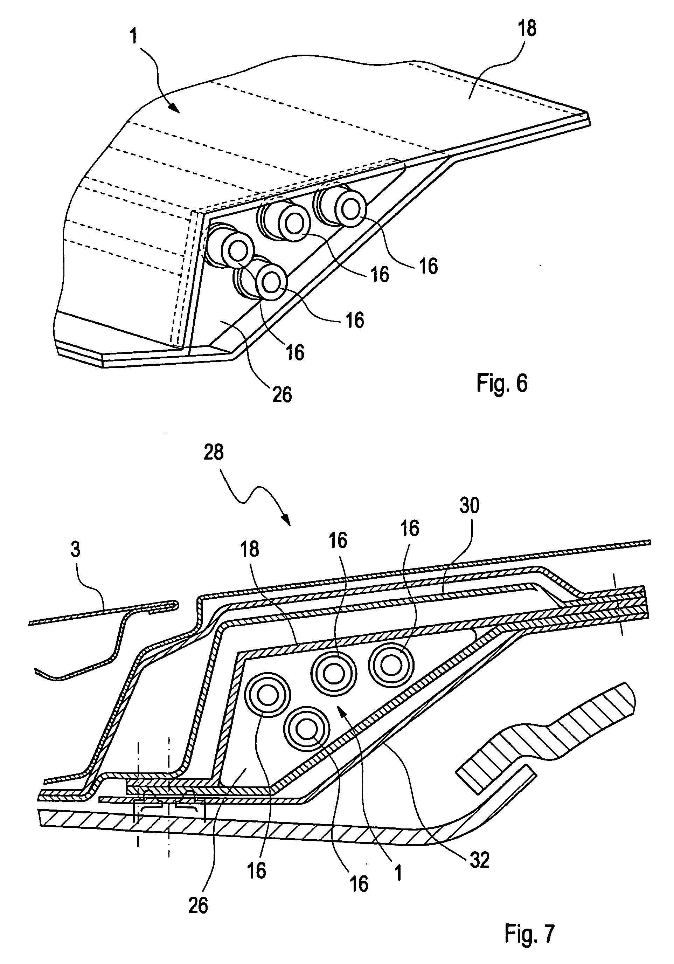

**Fig. 6** und **Fig. 7** zeigen, dass die vier Drehstabfedern 16 in der auf die Fahrzeugquerachse y bezogenen Mitte des Kraftfahrzeugs in einem Stützlager 26 abgestützt sind. Das Stützlager 26 weist hierbei vier Durchgangsbohrungen auf, durch welche die Drehstabfedern 16 geführt sind. Hierbei sind im Bereich des Stützlagers 26 drei der vier Drehstabfedern 16 im Wesentlichen in einer Ebene angeordnet, eine der vier Drehstabfedern 16 befindet sich unterhalb dieser Ebene. Das Drehstabfedersystem 1 ist in einen Dachquerträger 28 des Kraftfahrzeugs integriert. Der Dachquerträger 28 umfasst ein Oberteil 30 und ein mit diesem verbundenes Unterteil 32. Montageflansche des Gehäuses 18 sind hierbei mit dem Oberteil 30 und mit dem Unterteil 32 verbunden. Fig. 7 zeigt die in Richtung der Fahrzeuglängsachse x rückwärtig an den Dachquerträger 28 anschließende Heckklappe 3.

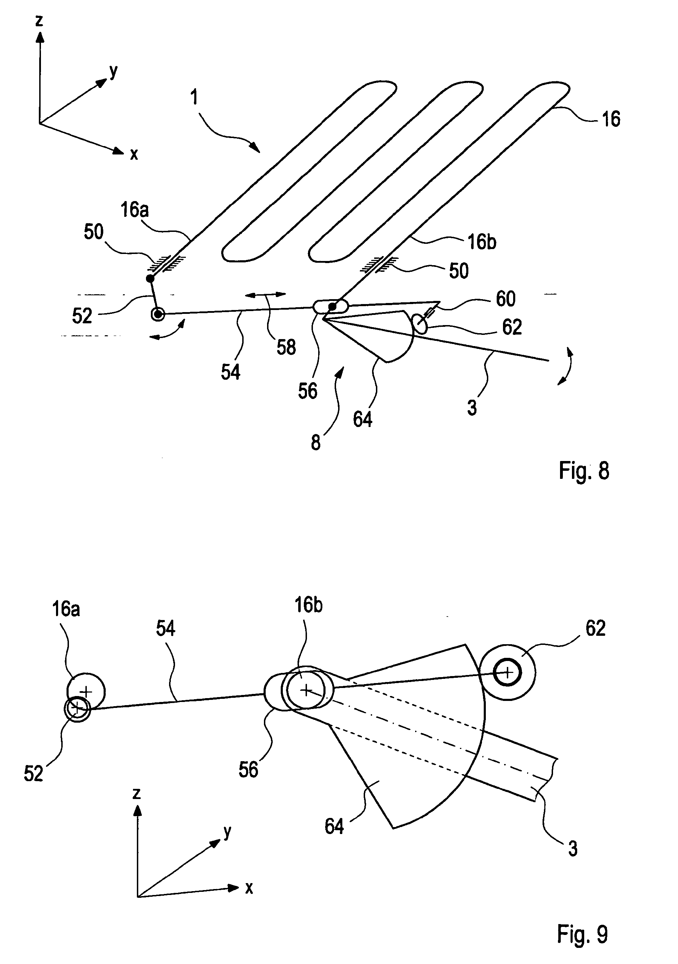

**Fig. 8** zeigt stark schematisiert ein alternatives Drehstabfedersystem 1, welches eine mäanderförmig gebogene Drehstabfeder 16 aufweist, deren sechs zueinander parallele Abschnitte über fünf bogenförmige Bereiche miteinander verbunden sind. Ein Frontabschnitt 16a und ein zu diesem paralleler Heckabschnitt 16b der Drehstabfeder 16 sind in jeweils einem Festlager 50 ortfest, jedoch drehbeweglich, gelagert. Die Drehstabfeder 16 ist vorgespannt, so dass über den Heckabschnitt 16b ein Torsionsmoment an die Heckklappe 3 bereitgestellt ist. Mittel zum Beeinflussen 8 des von der Drehstabfeder 16 an die Heckklappe 3 bereitgestellten Torsionsmoments umfassen vorliegend einen drehfest mit dem Frontabschnitt 16a verbundenen Exzenter 52, welcher mittels eines Schubelements 54 mechanisch mit der Heckklappe 3 gekoppelt ist. Das Schubelement 54 weist ein Langloch 56 auf, durch welches der Heckabschnitt 16b der Drehstabfeder 16 hindurchgeführt ist. Das Schubelement 54 ist gegenüber dem in dem Festlager 50 festgelegten Heckabschnitt 16b der Drehstabfeder 16 in Richtung der Fahrzeuglängsachse x beweglich. Eine entsprechende Bewegungsrichtung des Schubelements 54 ist in Fig. 8 durch einen Bewegungspfeil 58 veranschaulicht. Mit dem Schubelement 54 ist ein Übertragungselement 60 verbunden, welches beim Verbringen der Heckklappe 3 von der Geschlossenstellung in die Offenstellung und zurück bewegt wird. Das Übertragungselement 60 weist hierfür eine Rolle 62 auf, welche auf einer drehfest mit der Heckklappe 3 verbundenen Kurvenscheibe 64 beim Verschwenken der Heckklappe 3 abrollt.

**Fig. 9** zeigt das Drehstabfedersystem 1 gemäß Fig. 8, wobei die Heckklappe 3 sich in der Geschlossenstellung befindet. Hierbei ist das Langloch 56 in Bezug auf eine Mittelachse des Heckabschnitts 16b vergleichsweise weit entlang der Fahrzeugslängsachse x in Richtung des Frontabschnitts 16a verschoben. Entsprechend ist der Exzenter 52 relativ zu einer Mittelachse des Frontabschnitts 16a so weit in Richtung zu dem Frontabschnitt 16a hin bewegt, dass durch den Exzenter 52 die Vorspannung der Drehstabfeder 16 reduziert ist. Der Exzenter 52 stellt also in der Geschlossenstellung der Heckklappe 3 ein Gegenmoment zu dem von der Drehstabfeder 16 auf die Heckklappe 3 übertragenen Moment bereit.

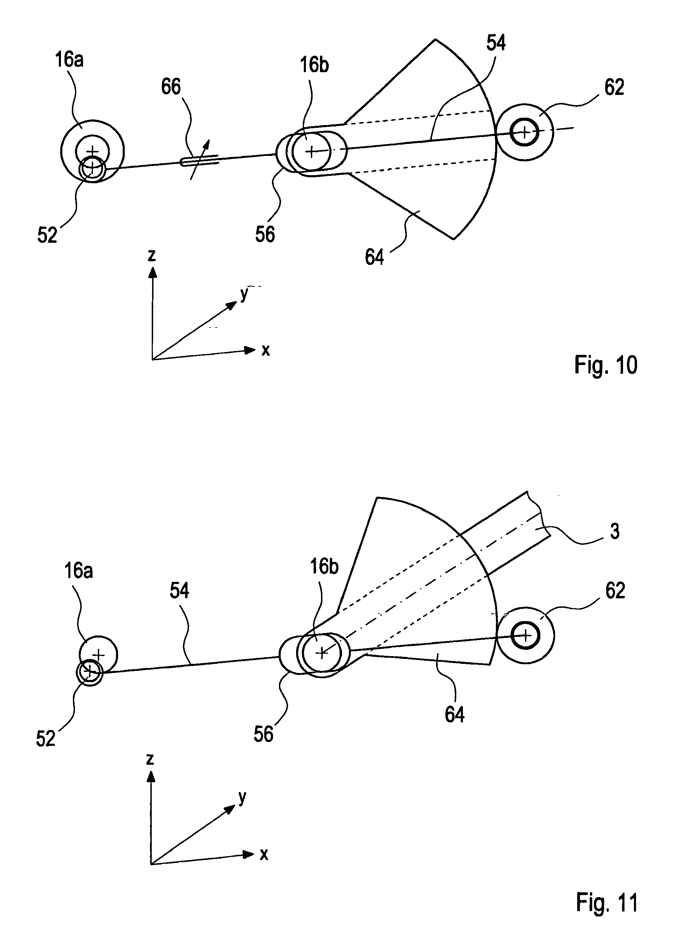

**Fig. 10** zeigt die um einen Öffnungswinkel von 52° öffenbare Heckklappe 3 bei einem Öffnungswinkel von 26°. Bei diesem Öffnungswinkel ist das von der Heckklappe 3 aufgebrachte Moment maximal, da die Schwerkraft maximal auf den Schwerpunkt der Heckklappe 3 wirkt. Die Rolle 62, welche in Richtung einer Fahrzeughochachse z gegenüber der in Fig. 9 gezeigten Position der Rolle 62 unverändert ist, ist mittels der Kurvenscheibe 64 maximal in Richtung der Fahrzeuglängsachse x von dem Heckabschnitt 16b weg bewegt. Entsprechend sind das Langloch 56 und mit diesem das Schubelement 54 gegenüber dem Heckabschnitt 16b der Drehstabfeder 16 besonders weit in Richtung der Fahrzeuglängsachse x nach vorne verschoben. Der Exzenter 52 stellt in dieser Stellung der Heckklappe kein Gegenmoment zu dem von der Drehstabfeder 16 auf die Heckklappe 3 übertragenen Moment bereit. Fig. 10 zeigt des Weiteren, dass das Schubelement 54 eine Verstelleinrichtung 66 aufweist, mittels welcher eine Länge des Schubelements 54 veränderbar ist. Dadurch ist ein Anpassen der Vorspannung der Drehstabfeder 16 an eine spezifische Heckklappe 3 erreichbar.

**Fig. 11** zeigt die Heckklappe 3 in der Offenstellung, bei der die Heckklappe 3 gegenüber der in Fig. 9 gezeigten Stellung um 52° verschwenkt ist. In analoger Weise zu der mit Bezug auf Fig. 9 geschilderten Funktionsweise der Mittel zum Beeinflussen 8 des von der Drehstabfeder 16 bereitgestellten Torsionsmoments ist die Rolle 62 auf der Kurvenscheibe 64 abgerollt, da die Kurvenscheibe 64 in Richtung der Fahrzeughochachse z nach oben verschwenkt ist. Die Rolle 62 ist demgegenüber in Richtung der Fahrzeughochachse z in einer unveränderten Position. In dieser Stellung der Heckklappe 3 ist mittels des Exzenters 52 das von der Drehstabfeder 16 bereitgestellte Torsionsmoment reduziert. Ein äußerer Rand der in Bezug auf die Hecklappe 3 symmetrischen Kurvenscheibe 64 bildet eine sinusförmige Konturlinie.

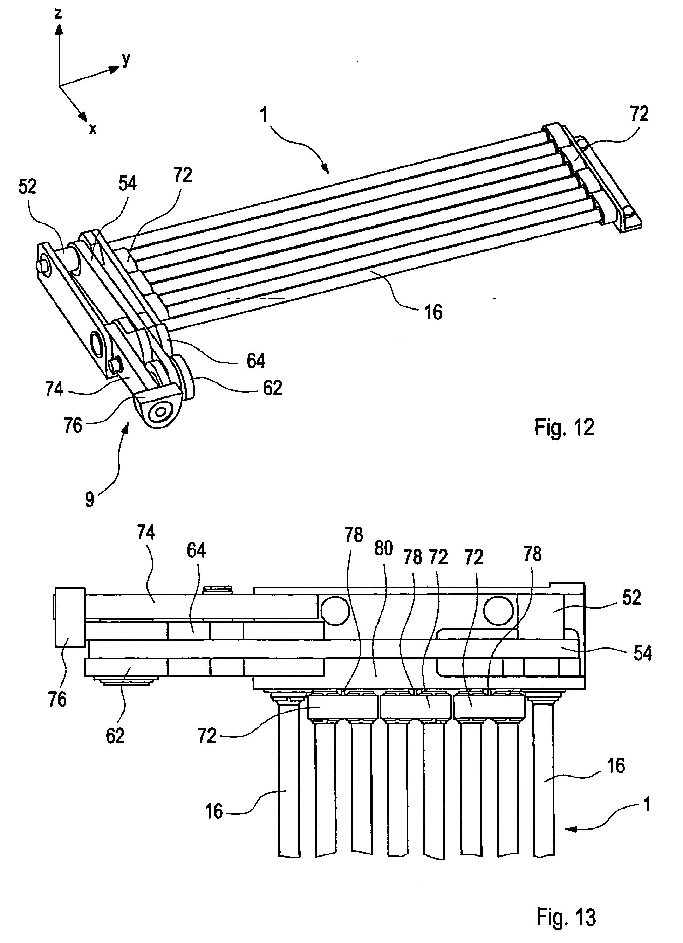

**Fig. 12** zeigt ein weiteres Drehstabfedersystem 1, welches von der Funktionsweise her dem mit Bezug auf Fig. 8 beschriebenen Drehstabfedersystem 1 entspricht. Bei dem Drehstabfedersystem 1 gemäß Fig. 12 sind jedoch acht zueinander parallele Drehstabfedern 16 je Scharnierhebel bereitgestellt. Eine Länge einer einzelnen der acht zueinander parallelen Drehstabfedern 16 ist hierbei so bemessen, dass sich jeweils eines der Drehstabfedersysteme 1 bis zur Mitte des Kraftfahrzeugs in Richtung der Fahrzeugquerachse y erstreckt. Jeweils zwei benachbarte Drehstabfedern 16 sind an ihren Enden mittels eines Kopplungselements 72 miteinander verbunden. Die mit der Kurvenscheibe 64 drehfest verbundene Drehstabfeder 16 ist zum Bewegen eines Schwenkarms 74 ausgelegt, welcher beim Bewegen der Heckklappe mit dieser in einem Schleifkontakt steht. Hierfür ist an dem Schwenkarm 74 ein Gleitstein 76 angeordnet.

**Fig. 13** zeigt eine Draufsicht auf einen Ausschnitt des Drehstabfedersystems 1 gemäß Fig. 12. Hierbei ist erkennbar, dass die Kopplungselemente 72 mittels Haltestäben 78 mit einer Halterung 80 verbunden sind. Durch die Haltestäbe 78 sind die Kopplungselemente 72 gegen ein Bewegen in die Fahrzeughochrichtung z gesichert. In der Halterung 80 sind zudem die Lager für den Exzenter 52, die mit der Kurvenscheibe 64 drehfest verbundene Drehstabfeder 16, das Schubelement 54 und den Schwenkarm 74 bereitgestellt.

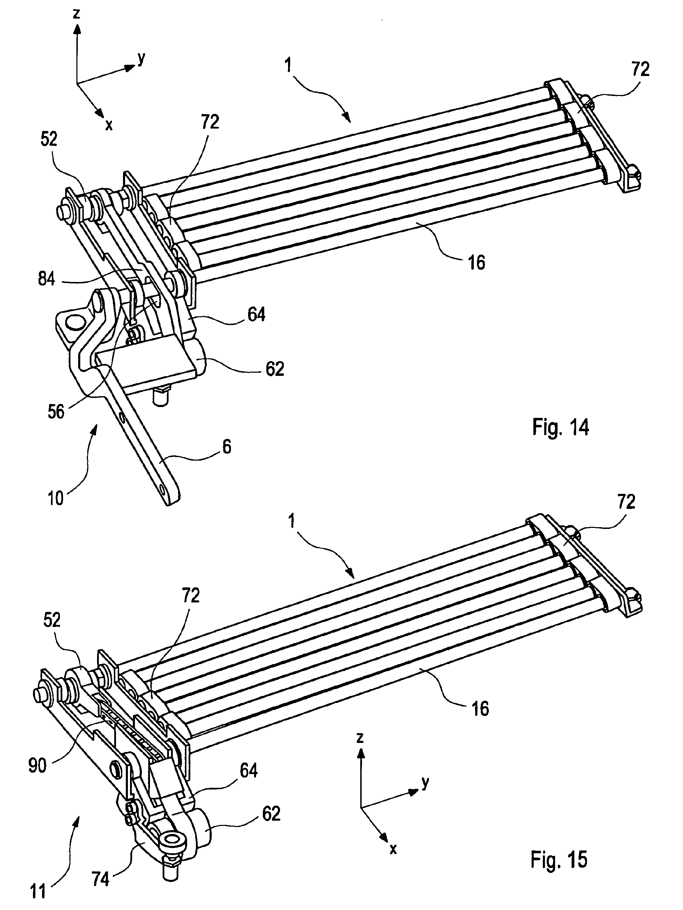

**Fig. 14** zeigt ein weiteres Drehstabfedersystem 1, welches funktionell dem mit Bezug auf Fig. 12 beschriebenen Drehstabfedersystem 1 entspricht. Lediglich ein das Langloch 56 aufweisendes Schubelement 84 ist gekröpft ausgebildet und so besonders gut in den Dachquerträger des Kraftfahrzeugs integrierbar. In dem Dachquerträger fällt eine Karosserie des Kraftfahrzeugs zu der Heckklappe 3 hin schräg ab. Des Weiteren ist bei dem Drehstabfedersystem 1 gemäß Fig. 14 ein mit der Drehstabfeder 16 verbundener Scharnierhebel 6 gezeigt. An der Drehstabfeder 16 ist des Weiteren die Kurvenscheibe 64 drehfest angeordnet.

Gemäß **Fig. 15** weist ein weiteres Drehstabfedersystem 1 anstelle des Schubelements 54, 84 einen Kettenzug 90 auf. Über den Kettenzug 90 ist in Folge des Abrollens der Rolle 62 auf der Kurvenscheibe 64 ein unterschiedlich starker Zug auf den Exzenter 52 ausübbar und so eine Vorspannung der miteinander gekoppelten Drehstabfedern 16 verringerbar.

Die Heckklappe 3 weist vorliegend senkrecht zu der Drehachse A eine Länge von 1,30 bis 1,40 m auf. Um eine derartige, vergleichsweise lange und mit einem Gewicht von bis zu 40 kg vergleichsweise schwere Heckklappe 3 von der Geschlossenstellung gegen die Schwerkraft in die Offenstellung zu verbringen, sind durch die Drehstabfedersysteme 1 Torsionsmomente in einer Größenordnung von über 200 Nm bereitstellbar. Mittels der beschriebenen Drehstabfedersysteme 1 ist diese besonders lange und schwere Heckklappe 3 so über ihren gesamten Öffnungsweg hin weitgehend im Gleichgewicht zu halten, auch wenn das Kraftfahrzeug nicht ebenerdig steht, sondern sich auf einer Straße mit einer Steigung oder mit einem Gefälle befindet. Die Drehstabfedersysteme 1 erlauben hierbei ein besonders genaues Nachführen des von diesen an die Heckklappe 3 bereitgestellten Torsionsmoments an das von der Heckklappe 3 beim Verschwenken aufgebrachte Moment.

### Liste der Bezugszeichen:

- A: Drehachse
- x: Fahrzeuglängsachse
- y: Fahrzeugquerachse
- z: Fahrzeughochachse
- 1: Energiespeicherelement
- 1a: erstes Energiespeicherelement
- 1b: zweites Energiespeicherelement
- 2: Mittel zum Beeinflussen
- 2a: Hebel
- 2b: Kulisse / erstes Langloch
- 2c: Schubelement
- 2d: Bolzen
- 2e: zweites Langloch
- 2f: Trägerplatte
- 2g: Seilscheibe
- 3: Klappe / Tür
- 4: Mittel zum Beeinflussen
- 4a: Koppelelement
- 4b: Koppelelement
- 5: Randbereich
- 6: Scharnierhebel
- 7: Mittel zum Beeinflussen
- 8: Mittel zum Beeinflussen
- 9: Mittel zum Beeinflussen
- 10: Mittel zum Beeinflussen
- 11: Mittel zum Beeinflussen
- 16: Drehstabfeder
- 16a: Frontabschnitt
- 16b: Heckabschnitt
- 18: Gehäuse
- 20: Schwenkarm
- 22: Rolle
- 24: Zahnräder
- 26: Stützlager
- 28: Dachquerträger
- 30: Oberteil
- 32: Unterteil
- 50: Festlager
- 52: Exzenter
- 54: Schubelement
- 56: Langloch
- 58: Bewegungspfeil
- 60: Übertragungselement
- 62: Rolle
- 64: Kurvenscheibe
- 66: Verstelleinrichtung
- 72: Kopplungselement
- 74: Schwenkarm
- 76: Gleitstein
- 78: Haltestäbe
- 80: Halterung
- 84: Schubelement
- 90: Kettenzug

## Patentansprüche

1. Kraftfahrzeug mit einer Klappe (3) oder Tür (3), die unter Einsatz wenigstens eines Energiespeicherelements (1) und damit gekoppelten Mitteln zum Beeinflussen (2, 4, 7, 8, 9, 10, 11) des von dem wenigstens einem Energiespeicherelement (1) an die Klappe (3) oder Tür (3) bereitgestellten Torsionsmoments, von einer Geschlossenstellung gegen die Schwerkraft in eine Offenstellung verbringbar ist, wobei die Klappe (3) oder Tür (3) um eine Drehachse (A) drehbar gelagert ist und wobei das Torsionsmoment durch die Mittel zum Beeinflussen (2, 4, 7, 8, 9, 10, 11) in Abhängigkeit von der Öffnungsstellung der Klappe (3) oder Tür (3) beeinflussbar ist, **dadurch gekennzeichnet, dass** an dem Energiespeicherelement (1) ein Hebel (2a) mit variabler Hebelarmlänge drehfest angeordnet ist, der mit seinem frei verschwenkbaren Ende in einer Kulisse (2b) geführt ist, wobei an dem frei verschwenkbaren Ende zusätzlich ein Schubelement (2c) angreift, welches mit der Klappe (3) oder Tür (3) in Wirkverbindung steht und von diesen im Wesentlichen translatorisch bewegbar ist.

2. Kraftfahrzeug mit einer Klappe oder Tür nach Anspruch 1, **dadurch gekennzeichnet, dass** die Kulisse (2b) als ein erstes Langloch ausgebildet ist, in dem ein an dem frei verschwenkbaren Ende des Hebels (2a) angeordneter Bolzen (2d) geführt wird, wobei das erste Langloch (2b) in axialer Erstreckung kurvig, vorzugsweise sinusförmig, ausgebildet ist.

3. Kraftfahrzeug mit einer Klappe oder Tür nach Anspruch 1 oder 2, **dadurch gekennzeichnet, dass** der Bolzen (2d) in einem in dem Hebel (2a) ausgebildeten zweiten Langloch (2e), welches sich im Wesentlichen in axialer Richtung des Hebels (2a) erstreckt, beweglich gelagert ist.

4. Kraftfahrzeug mit einer Klappe oder Tür nach einem der Ansprüche 1 bis 3, **dadurch gekennzeichnet, dass** das erste Langloch (2b) in axialer Erstreckung kurvig, vorzugsweise sinusförmig, ausgebildet ist.

5. Kraftfahrzeug mit einer Klappe oder Tür nach einem der Ansprüche 1 bis 4, **dadurch gekennzeichnet, dass** das Schubelement (2c) mit Versatz zu der Drehachse (A) an der Klappe (3) oder Tür (3) angreift.

6. Kraftfahrzeug mit einer Klappe (3) oder Tür (3), die unter Einsatz wenigstens eines Energiespeicherelements (1) und damit gekoppelten Mitteln zum Beeinflussen (2, 4, 7, 8, 9, 10, 11) des von dem wenigstens einem Energiespeicherelement (1) an die Klappe (3) oder Tür (3) bereitgestellten Torsionsmoments, von einer Geschlossenstellung gegen die Schwerkraft in eine Offenstellung verbringbar ist, wobei die Klappe (3) oder Tür (3) um eine Drehachse (A) drehbar gelagert ist, wobei das Torsionsmoment durch die Mittel zum Beeinflussen (2, 4, 7, 8, 9, 10, 11) in Abhängigkeit von der Öffnungsstellung der Klappe (3) oder Tür (3) beeinflussbar ist, wobei ein erstes (1a) und ein zweites Energiespeicherelement (1 b) mit Kräften in gegenläufiger Wirkrichtung beaufschlagbar sind und die Energiespeicherelemente (1a, 1b) über die Mittel zum Beeinflussen (4) mit der Klappe (3) oder Tür (3) wirkverbunden sind, **dadurch gekennzeichnet, dass** die Mittel zum Beeinflussen (4) als separate Koppelelemente (4a, 4b) ausgebildet sind, die jeweils mit Versatz zur ortsfesten Drehachse (A) an der Klappe (3) oder Tür (3) angreifen.

7. Kraftfahrzeug mit einer Klappe oder Tür nach Anspruch 6, **dadurch gekennzeichnet, dass** die Koppelelemente (4a, 4b) als Gelenkscharniere ausgebildet und drehfest an den Energiespeicherelementen (1 a, 1 b) angeordnet sind.

8. Kraftfahrzeug mit einer Klappe oder Tür nach einem der Ansprüche 1 bis 7, **dadurch gekennzeichnet, dass** die Mittel zum Beeinflussen (2, 4, 7, 8, 9, 10, 11) das Torsionsmoment derart beeinflussen, dass sich in mehreren Öffnungsstellungen der Klappe (3) oder Tür (3) ein Momentengleichgewicht einstellt.

9. Kraftfahrzeug mit einer Klappe oder Tür nach einem der Ansprüche 1 bis 8, **dadurch gekennzeichnet, dass** die Energiespeicherelemente (1) eine im Wesentlichen lineare Kraft-Weg-Kennlinie aufweisen.

10. Kraftfahrzeug mit einer Klappe oder Tür nach einem der Ansprüche 1 bis 9, **dadurch gekennzeichnet, dass** die Energiespeicherelemente (1) als Drehstabfedern (16) oder Drehstabfedersysteme ausgebildet sind.

11. Kraftfahrzeug mit einer Klappe oder Tür nach Anspruch 10, **dadurch gekennzeichnet, dass** das Drehstabfedersystem (1) aus mehreren Drehstäben (16) besteht, die untereinander derart verbunden sind, dass sich die wirksame Länge der miteinander verbundenen Drehstabfedern (16) erhöht.

12. Kraftfahrzeug mit einer Klappe oder Tür nach Anspruch 10 oder 11, **dadurch gekennzeichnet, dass** die Drehstabfeder (16) oder das Drehstabfedersystem (1) in ein zum Begrenzen eines Fahrgastraums bereitgestelltes Karosserieelement (28) integriert ist.

13. Kraftfahrzeug nach einem der Ansprüche 10 bis 12, **dadurch gekennzeichnet, dass** die wenigstens eine Drehstabfeder (16) kürzer ist als eine Breite der Klappe (3) in Richtung einer zum Kraftfahrzeug definierten Fahrzeugquerachse (y).

14. Kraftfahrzeug nach einem der Ansprüche 10 bis 13, **dadurch gekennzeichnet, dass** die wenigstens eine Drehstabfeder (16) gekrümmt und in wenigstens einem Stützlager (26) abgestützt ist.

15. Kraftfahrzeug nach einem der Ansprüche 10 bis 14, **dadurch gekennzeichnet, dass** die wenigstens eine Drehstabfeder (16) von wenigstens einem Gehäuse (18) zur Förderung einer Quersteifigkeit des Karosserieelements (28) umgeben ist.

16. Kraftfahrzeug mit einer Klappe oder Tür nach einem der Ansprüche 1 bis 15, **dadurch gekennzeichnet, dass** die Klappe (3) eine Heckklappe oder ein Kofferraumdeckel ist, wobei die Mittel zum Beeinflussen (2, 4, 7, 8, 9, 10, 11) symmetrisch an den äußeren Randbereichen (5) der Heckklappe (3) oder des Kofferraumdeckels angreifen.

17. Kraftfahrzeug mit einer Klappe oder Tür nach einem der Ansprüche 1 bis 16, **dadurch gekennzeichnet, dass** die Tür (3) eine Scherentür oder Schmetterlingstür ist.

## Claims

1. Motor vehicle having a panel (3) or door (3) that can be brought from a closed position into an open position against the force of gravity using at least one energy storage element (1) and means that are coupled thereto for influencing (2, 4, 7, 8, 9, 10, 11) the torsional moment provided on the panel (3) or door (3) by the at least one energy storage element (1), wherein the panel (3) or door (3) is mounted in a rotatable manner about an axis of rotation (A) and wherein the torsional moment can be influenced by the influencing means (2, 4, 7, 8, 9, 10, 11) on the basis of the opening position of the panel (3) or door (3), **characterised in that** a lever (2a) having a variable lever arm length is disposed on the energy storage element (1) for rotation therewith, the freely pivotable end of said lever being guided in a connecting link (2b), wherein a thrust element (2c) which is operationally connected to the panel (3) or door (3) and can be moved in a substantially translatory manner by said panel or door additionally acts on the freely pivotable end.

2. Motor vehicle having a panel or door according to claim 1, **characterised in that** the connecting link (2b) is configured as a first slot in which a bolt (2d) which is disposed at the freely pivotable end of the lever (2a) is guided, wherein the first slot (2b) is curvilinear, preferably sinusoidal, in the axial extension.

3. Motor vehicle having a panel or door according to either claim 1 or claim 2, **characterised in that** the bolt (2d) is mounted in a movable manner in a second slot (2e) which is formed in the lever (2a) and which extends substantially in the axial direction of the lever (2a).

4. Motor vehicle having a panel or door according to any of claims 1 to 3, **characterised in that** the first slot (2b) is curvilinear, preferably sinusoidal, in the axial extension.

5. Motor vehicle having a panel or door according to any of claims 1 to 4, **characterised in that** the thrust element (2c) acts on the panel (3) or door (3) with an offset from the axis of rotation (A).

6. Motor vehicle having a panel (3) or door (3) that can be brought from a closed position into an open position against the force of gravity using at least one energy storage element (1) and means that are coupled thereto for influencing (2, 4, 7, 8, 9, 10, 11) the torsional moment provided on the panel (3) or door (3) by the at least one energy storage element (1), wherein the panel (3) or door (3) is mounted in a rotatable manner about an axis of rotation (A), wherein the torsional moment can be influenced by the influencing means (2, 4, 7, 8, 9, 10, 11) on the basis of the opening position of the panel (3) or door (3), wherein a first (1 a) and a second energy storage element (1 b) can be subjected to forces in opposite directions of action and the energy storage elements (1a, 1b) are operationally connected to the panel (3) or door (3) via the influencing means (4), **characterised in that** the influencing means (4) are constructed as separate coupling elements (4a, 4b) which each act on the panel (3) or door (3) with an offset from the stationary axis of rotation (A).

7. Motor vehicle having a panel or door according to claim 6, **characterised in that** the coupling elements (4a, 4b) are constructed as articulation hinges and are disposed on the energy storage elements (1a, 1 b) for rotation therewith.

8. Motor vehicle having a panel or door according to any of claims 1 to 7, **characterised in that** the influencing means (2, 4, 7, 8, 9, 10, 11) influence the torsional moment such that a moment equilibrium is reached in a plurality of opening positions of the panel (3) or door (3).

9. Motor vehicle having a panel or door according to any of claims 1 to 8, **characterised in that** the energy storage elements (1) exhibit a substantially linear force/travel characteristic.

10. Motor vehicle having a panel or door according to any of claims 1 to 9, **characterised in that** the energy storage elements (1) are constructed as torsion bar springs (16) or torsion bar spring systems.

11. Motor vehicle having a panel or door according to claim 10, **characterised in that** the torsion bar spring system (1) consists of a plurality of torsion bars (16) that are interconnected such that the effective length of the interconnected torsion bar springs (16) is increased.

12. Motor vehicle having a panel or door according to either claim 10 or claim 11, **characterised in that** the torsion bar spring (16) or the torsion bar spring system (1) is integrated into a body element (28) that is provided for defining a passenger compartment.

13. Motor vehicle according to any of claims 10 to 12, **characterised in that** the at least one torsion bar spring (16) is shorter than a width of the panel (3) in the direction of a transverse vehicle axis (y) defined relative to the motor vehicle.

14. Motor vehicle according to any of claims 10 to 13, **characterised in that** the at least one torsion bar spring (16) is curved and supported in at least one support bearing (26).

15. Motor vehicle according to any of claims 10 to 14, **characterised in that** the at least one torsion bar spring (16) is surrounded by at least a housing (18) for enhancing transverse stiffness of the body element (28).

16. Motor vehicle having a panel or door according to any of claims 1 to 15, **characterised in that** the panel (3) is a tailgate or a luggage compartment lid, wherein the influencing means (2, 4, 7, 8, 9, 10, 11) act in a symmetrical manner on the outer edge regions (5) of the tailgate (3) or the luggage compartment lid.

17. Motor vehicle having a panel or door according to any of claims 1 to 16, **characterised in that** the door (3) is a scissor door or butterfly door.

## Revendications

1. Véhicule automobile avec un hayon (3) ou une porte (3), qui peuvent être amenés d'une position fermée à une position ouverte en allant à l'encontre de la gravité en utilisant au moins un élément accumulateur d'énergie (1) et des moyens d'action (2, 4, 7, 8, 9, 10, 11) couplés à celui-ci pour influencer le moment de torsion exercé par l'au moins un élément accumulateur d'énergie (1) sur le hayon (3) ou la porte (3), le hayon (3) ou la porte (3) étant logé de manière à pouvoir tourner autour d'un axe de rotation (A) et le moment de torsion pouvant être influencé par les moyens d'action (2, 4, 7, 8, 9, 10, 11) en fonction de la position d'ouverture du hayon (3) ou de la porte (3), **caractérisé en ce qu'**un levier (2a) avec longueur de bras de levier variable est agencé, fixe en rotation, sur l'élément accumulateur d'énergie (1), lequel levier est guidé avec son extrémité librement pivotante dans une coulisse (2b), un élément de poussée (2c) qui est en liaison active avec le hayon (3) ou la porte (3) et qui peut être déplacé globalement en translation par ceux-ci étant en prise en plus avec l'extrémité librement pivotante.

2. Véhicule automobile avec un hayon ou une porte selon la revendication 1, **caractérisé en ce que** la coulisse (2b) est conçue comme un premier trou oblong dans lequel est guidé un axe (2d) agencé sur l'extrémité librement pivotante du levier (2a), le premier trou oblong (2b) étant conçu avec une forme courbe, de préférence sinusoïdale, en direction axiale.

3. Véhicule automobile avec un hayon ou une porte selon la revendication 1 ou selon la revendication 2, **caractérisé en ce que** l'axe (2d) est logé, mobile, dans un second trou oblong (2e) qui est prévu dans le levier (2a) et qui s'étend globalement dans la direction axiale du levier (2a).

4. Véhicule automobile avec un hayon ou une porte selon l'une des revendications 1 à 3, **caractérisé en ce que** le premier trou oblong (2b) est conçu avec une forme courbe, de préférence sinusoïdale, en direction axiale.

5. Véhicule automobile avec un hayon ou une porte selon l'une des revendications 1 à 4, **caractérisé en ce que** l'élément de poussée (2c) est en prise avec le hayon (3) ou la porte (3) avec un certain décalage par rapport à l'axe de rotation (A).

6. Véhicule automobile avec un hayon (3) ou une porte (3), qui peuvent être amenés d'une position fermée à une position ouverte en allant à l'encontre de la gravité en utilisant au moins un élément accumulateur d'énergie (1) et des moyens d'action (2, 4, 7, 8, 9, 10, 11) couplés à celui-ci pour influencer le moment de torsion exercé par l'au moins un élément accumulateur d'énergie (1) sur le hayon (3) ou la porte (3), le hayon (3) ou la porte (3) étant logé de manière à pouvoir tourner autour d'un axe de rotation (A) et le moment de torsion étant influençable par les moyens d'action (2, 4, 7, 8, 9, 10, 11) en fonction de la position d'ouverture du hayon (3) ou de la porte (3), un premier (1a) et un second (1b) élément accumulateur d'énergie pouvant être soumis à des forces agissant dans des sens opposés et les éléments accumulateurs d'énergie (1a, 1b) étant reliés pour une liaison active avec le hayon (3) ou la porte (3) par l'intermédiaire des moyens d'action (4), **caractérisé en ce que** les moyens d'action (4) sont conçus comme des éléments de couplage distincts (4a, 4b) qui viennent en prise avec le hayon (3) ou la porte (3) à chaque fois avec un certain décalage par rapport à l'axe de rotation (A) fixe.

7. Véhicule automobile avec un hayon ou une porte selon la revendication 6, **caractérisé en ce que** les éléments de couplage (4a, 4b) sont conçus comme des charnières à articulations et sont agencés, fixes en rotation, sur les éléments accumulateurs d'énergie (1a, 1b).

8. Véhicule automobile avec un hayon ou une porte selon l'une des revendications 1 à 7, **caractérisé en ce que** les moyens d'action (2, 4, 7, 8, 9, 10, 11) influencent le moment de torsion de telle sorte qu'un équilibre des moments s'installe dans plusieurs positions d'ouverture du hayon (3) ou de la porte (3).

9. Véhicule automobile avec un hayon ou une porte selon l'une des revendications 1 à 8, **caractérisé en ce que** les éléments accumulateurs d'énergie (1) présentent une courbe caractéristique force-trajectoire globalement linéaire.

10. Véhicule automobile avec un hayon ou une porte selon l'une des revendications 1 à 9, **caractérisé en ce que** les éléments accumulateurs d'énergie (1) sont conçus comme des ressorts à barre de torsion (16) ou comme des systèmes de ressorts à barre de torsion.

11. Véhicule automobile avec un hayon ou une porte selon la revendication 10, **caractérisé en ce que** le système de ressorts à barre de torsion (1) est constitué de plusieurs barres de torsion (16) qui sont assemblées les unes aux autres de telle sorte que la longueur efficace des ressorts à barres de torsion assemblés (16) augmente.

12. Véhicule automobile avec un hayon ou une porte selon la revendication 10 ou la revendication 11, **caractérisé en ce que** le ressort à barre de torsion (16) ou le système de ressorts à barre de torsion (1) est intégré dans un élément de carrosserie (28) présent pour limiter un intérieur de véhicule.

13. Véhicule automobile selon l'une des revendications 10 à 12, **caractérisé en ce que** l'au moins un ressort à barre de torsion (16) est plus court qu'une largeur du hayon (3) dans la direction d'un axe transversal de véhicule (y) défini par rapport au véhicule automobile.

14. Véhicule automobile selon l'une des revendications 10 à 13, **caractérisé en ce que** l'au moins un ressort à barre de torsion (16) est courbe et soutenu dans au moins un palier (26).

15. Véhicule automobile selon l'une des revendications 10 à 14, **caractérisé en ce que** l'au moins un ressort à barre de torsion (16) est entouré d'au moins un carter (18) pour le transfert d'une rigidité transversale de l'élément de carrosserie (28).

16. Véhicule automobile avec un hayon ou une porte selon l'une des revendications 1 à 15, **caractérisé en ce que** le hayon (3) est un hayon arrière ou un couvercle de coffre à bagages, les moyens d'action (2, 4, 7, 8, 9, 10, 11) venant en prise symétriquement avec les bords extérieurs (5) du hayon arrière (3) ou du couvercle de coffre à bagages.

17. Véhicule automobile avec un hayon ou une porte selon l'une des revendications 1 à 16, **caractérisé en ce que** la porte (3) est une porte papillon.
